# EUROPEAN PATENT APPLICATION

(11) **EP 4 475 609 A1**
(43) Date of publication of application: **11.12.2024**
(21) Application number: 22925427.1
(22) Date of filing: 13.02.2022
(51) Int. Cl.: H04W 72/04

(54) **INITIAL BANDWIDTH PART CONFIGURATION METHOD AND APPARATUS AND INITIAL BANDWIDTH PART SWITCHING METHOD AND APPARATUS**

(71) Applicant: Beijing Xiaomi Mobile Software Co., Ltd., Beijing 100085 (CN)
(72) Inventor: LI, Yanhua, Beijing 100085 (CN)
(74) Representative: Dehns Germany Partnerschaft mbB
(86) International application number: PCT/CN2022/076129
(87) International publication number: WO 2023/151065

(57) **Abstract**

The present disclosure relates to the field of communications, and provides an initial bandwidth part (BWP) configuration method and apparatus and an initial BWP switching method and apparatus. The technical solution of the present application is mainly that: a network device sends BWP related information indicating a downlink initial BWP and/or an uplink initial BWP of a specific type of terminal to the terminal, so that the specific type of terminal can determine the downlink initial BWP and the uplink initial BWP according to the BWP related information, thereby implementing initial BWP configuration for the specific type of terminal.

## Description

### TECHNICAL FIELD

The present disclosure relates to the field of mobile communication technology, in particular to a method and an apparatus for configuring an initial bandwidth part (BWP), and a method and an apparatus for determining an initial BWP.

### BACKGROUND

In the new generation of communication technology, the terminal may work based on a bandwidth part (BWP). That is, the terminal does not need to monitor the entire bandwidth, but only needs to send and receive data on a part of the system bandwidth.

In the current 3rd Generation Partnership Project (3GPP) standardization, a new terminal type, namely, a reduced capability (Redcap)-type terminal, is proposed. For the Redcap-type terminal, how to configure an initial BWP and to which BWP the Redcap-type terminal should switch when the Redcap-type terminal needs to switch BWP during a random access channel (RACH) process are still issues that need to be resolved.

### SUMMARY

The present disclosure provides a method and an apparatus for configuring an initial bandwidth part (BWP), and a method and an apparatus for switching an initial BWP, so as to make up a technical gap in the related art regarding how to configure an initial BWP for a specific-type terminal (such as a Redcap-type terminal) and how to perform BWP switching during a random access channel (RACH) process.

According to a first aspect of embodiments of the disclosure, a method for configuring an initial BWP is provided, performed by a network device. The method includes: sending BWP-related information to a terminal, in which the BWP-related information includes first downlink initial BWP information indicating a downlink initial BWP dedicated to a specific-type terminal with a reduced capability and/or first uplink initial BWP information indicating an uplink initial BWP dedicated to the specific-type terminal.

Optionally, for an asymmetric spectrum, a center frequency point of the uplink initial BWP indicated by the first uplink initial BWP information is aligned with a center frequency point of the downlink initial BWP indicated by the first downlink initial BWP information.

Optionally, the first downlink initial BWP information has at least one of a random access response (RAR) search space, a paging search space, or other system message search space.

Optionally, the first downlink initial BWP information only has a RAR search space or a paging search space.

Optionally, the BWP-related information is carried in a system information block 1 (SIB1).

According to a second aspect of the embodiments of the disclosure, a method for configuring an initial BWP is provided, performed by a specific-type terminal. The method includes: obtaining BWP-related information sent by a network device, in which the BWP-related information includes first downlink initial BWP information indicating a downlink initial BWP dedicated to the specific-type terminal with a reduced capability and/or first uplink initial BWP information indicating an uplink initial BWP dedicated to the specific-type terminal; and determining an uplink initial BWP and/or a downlink initial BWP used by the specific-type terminal according to the BWP-related information.

Optionally, determining the downlink initial BWP used by the specific-type terminal according to the BWP-related information includes any of: when the BWP-related information includes the first downlink initial BWP information, determining the downlink initial BWP indicated by the first downlink initial BWP information as the downlink initial BWP used by the specific-type terminal; or when the BWP-related information does not include the first downlink initial BWP information, determining the downlink initial BWP indicated by second downlink initial BWP information as the downlink initial BWP used by the specific-type terminal, in which the second downlink initial BWP information is included in the BWP-related information or a MIB, and the second downlink initial BWP information indicates a downlink initial BWP for a common-type terminal.

Optionally, determining the uplink initial BWP used by the specific-type terminal according to the BWP-related information includes any of: when the BWP-related information includes the first uplink initial BWP information, determining the uplink initial BWP indicated by the first uplink initial BWP information as the uplink initial BWP used by the specific-type terminal; or when the BWP-related information does not include the first uplink initial BWP information, determining the uplink initial BWP indicated by second uplink initial BWP information as the uplink initial BWP used by the specific-type terminal, in which the second uplink initial BWP information is included in the BWP-related information, and the second uplink initial BWP information indicates an uplink initial BWP for a common-type terminal.

Optionally, obtaining the BWP-related information sent by the network device includes: obtaining the BWP-related information from an SIB1.

According to a third aspect of the embodiments of the disclosure, a method for switching an initial BWP is provided, performed by a specific-type terminal in a connected state. The method includes: performing BWP switching according to BWP-related information obtained from system information sent by the network device, in which the system information includes a MIB and/or an SIB1.

Optionally, performing BWP switching according to the BWP-related information obtained from the system information sent by the network device includes any of: when there is no RACH on a current active BWP, performing uplink BWP switching and downlink BWP switching according to the BWP-related information obtained from the system information; or when a BWP inactivity timer on a current active BWP expires and the specific-type terminal is not configured with a default downlink BWP, performing downlink BWP switching according to the BWP-related information obtained from the system information.

Optionally, when there is no RACH on the current active BWP, performing uplink BWP switching according to the BWP-related information obtained from the system information includes: when the BWP-related information obtained from the SIB1 includes first uplink initial BWP information indicating an uplink initial BWP dedicated to the specific-type terminal, switching an uplink BWP to the uplink initial BWP indicated by the first uplink initial BWP information.

Optionally, when there is no RACH on the current active BWP, performing uplink BWP switching according to the BWP-related information obtained from the system information includes: when the BWP-related information obtained from the SIB1 includes first uplink initial BWP information indicating an uplink initial BWP dedicated to the specific-type terminal and the uplink initial BWP indicated by the first uplink initial BWP information has random access resources configured for the specific-type terminal, switching an uplink BWP to the uplink initial BWP indicated by the first uplink initial BWP information.

Optionally, when there is no RACH on the current active BWP, performing uplink BWP switching according to the BWP-related information obtained from the system information includes: when the BWP-related information obtained from the SIB1 includes second uplink initial BWP information indicating an uplink initial BWP for a common-type terminal but does not include first uplink initial BWP information indicating an uplink initial BWP dedicated to the specific-type terminal, or when the BWP-related information obtained from the SIB1 includes the first uplink initial BWP information and the second uplink initial BWP information but the uplink initial BWP indicated by the first uplink initial BWP information does not have random access resources configured for the specific-type terminal, switching an uplink BWP to the uplink initial BWP indicated by the second uplink initial BWP information.

Optionally, when there is no RACH on the current active BWP, performing downlink BWP switching according to the BWP-related information obtained from the system information includes: switching a downlink BWP to a downlink initial BWP with a RAR search space of the specific-type terminal.

Optionally, switching the downlink BWP to the downlink initial BWP with the RAR search space of the specific-type terminal includes: when the BWP-related information obtained from the SIB 1 includes first downlink initial BWP information indicating a downlink initial BWP dedicated to the specific-type terminal, and the downlink initial BWP indicated by the first downlink initial BWP information has the RAR search space, switching the downlink BWP to the downlink initial BWP indicated by the first downlink initial BWP information.

Optionally, switching the downlink BWP to the downlink initial BWP with the RAR search space of the specific-type terminal includes: when the BWP-related information obtained from the SIB 1 includes second downlink initial BWP information indicating a downlink initial BWP for a common-type terminal and first downlink initial BWP information indicating a downlink initial BWP dedicated to the specific-type terminal, the downlink initial BWP indicated by the first downlink initial BWP information does not have the RAR search space, and the downlink initial BWP indicated by the second downlink initial BWP information included in the BWP-related information obtained from the SIB1 meets a preset bandwidth requirement, switching the downlink BWP to the downlink initial BWP indicated by the second downlink initial BWP information included in the BWP-related information obtained from the SIB1.

Optionally, switching the downlink BWP to the downlink initial BWP with the RAR search space of the specific-type terminal includes: when the BWP-related information obtained from the SIB 1 includes second downlink initial BWP information indicating a downlink initial BWP for a common-type terminal and first downlink initial BWP information indicating a downlink initial BWP dedicated to the specific-type terminal, the downlink initial BWP indicated by the first downlink initial BWP information does not have the RAR search space, and the downlink initial BWP indicated by the second downlink initial BWP information included in the BWP-related information obtained from the SIB1 does not meet a preset bandwidth requirement, switching the downlink BWP to a downlink initial BWP for the common-type terminal indicated by third downlink initial BWP information included in the BWP-related information obtained from the MIB.

Optionally, switching the downlink BWP to the downlink initial BWP with the RAR search space of the specific-type terminal includes: when the BWP-related information obtained from the SIB 1 does not include second downlink initial BWP information indicating a downlink initial BWP for a common-type terminal but includes first downlink initial BWP information indicating a downlink initial BWP dedicated to the specific-type terminal, and the downlink initial BWP indicated by the first downlink initial BWP information does not have the RAR search space, switching the downlink BWP to a downlink initial BWP for the common-type terminal indicated by third downlink initial BWP information included in the BWP-related information obtained from the MIB.

Optionally, switching the downlink BWP to the downlink initial BWP with the RAR search space of the specific-type terminal includes: when the BWP-related information obtained from the SIB 1 includes first downlink initial BWP information indicating a downlink initial BWP dedicated to the specific-type terminal, and the downlink initial BWP indicated by the first downlink initial BWP information does not have the RAR search space, switching the downlink BWP to the downlink initial BWP for a common-type terminal indicated by third downlink initial BWP information included in the BWP-related information obtained from the MIB.

Optionally, when the BWP inactivity timer on the current active BWP expires and the specific-type terminal is not configured with the default downlink BWP, performing downlink BWP switching according to the BWP-related information obtained from the system information includes: when the BWP-related information obtained from the SIB1 includes first downlink initial BWP information indicating a downlink initial BWP dedicated to the specific-type terminal, switching a downlink BWP to the downlink initial BWP indicated by the first downlink initial BWP information.

Optionally, performing downlink BWP switching according to the BWP-related information obtained from the system information includes: when the BWP-related information obtained from the SIB1 includes second downlink initial BWP information indicating a downlink initial BWP for a common-type terminal but does not include first downlink initial BWP information indicating a downlink initial BWP dedicated to the specific-type terminal, and the downlink initial BWP indicated by the second downlink initial BWP information included in the BWP-related information obtained from the SIB 1 meets a preset bandwidth requirement, switching a downlink BWP to the downlink initial BWP indicated by the second downlink initial BWP information included in the BWP-related information obtained from the SIB1.

Optionally, performing downlink BWP switching according to the BWP-related information obtained from the system information includes: when the BWP-related information obtained from the SIB1 includes second downlink initial BWP information indicating a downlink initial BWP for a common-type terminal but does not include first downlink initial BWP information indicating a downlink initial BWP dedicated to the specific-type terminal, and the downlink initial BWP indicated by the second downlink initial BWP information included in the BWP-related information obtained from the SIB 1 does not meet a preset bandwidth requirement, switching a downlink BWP to a downlink initial BWP for the common-type terminal indicated by third downlink initial BWP information included in the BWP-related information obtained from the MIB.

Optionally, performing downlink BWP switching according to the BWP-related information obtained from the system information includes: when the BWP-related information obtained from the SIB1 does not include second downlink initial BWP information indicating a downlink initial BWP for a common-type terminal and first downlink initial BWP information indicating a downlink initial BWP dedicated to the specific-type terminal, switching a downlink BWP to a downlink initial BWP for the common-type terminal indicated by third downlink initial BWP information included in the BWP-related information obtained from the MIB.

Optionally, performing downlink BWP switching according to the BWP-related information obtained from the system information includes: when the BWP-related information obtained from the SIB1 does not include first downlink initial BWP information indicating a downlink initial BWP dedicated to the specific-type terminal, switching a downlink BWP to a downlink initial BWP for a common-type terminal indicated by third downlink initial BWP information included in the BWP-related information obtained from the MIB.

According to a fourth aspect of the embodiments of the disclosure, an apparatus for configuring an initial BWP is provided. The apparatus includes: a transceiver module, configured to send BWP-related information to a terminal, in which the BWP-related information includes first downlink initial BWP information indicating a downlink initial BWP dedicated to a specific-type terminal and/or first uplink initial BWP information indicating an uplink initial BWP dedicated to the specific-type terminal.

According to a fifth aspect of the embodiments of the disclosure, an apparatus for configuring an initial BWP is provided. The apparatus includes: a transceiver module, configured to obtain BWP-related information sent by a network device, in which the BWP-related information includes first downlink initial BWP information indicating a downlink initial BWP dedicated to the specific-type terminal and/or first uplink initial BWP information indicating an uplink initial BWP dedicated to the specific-type terminal; and a processing module, configured to determine an uplink initial BWP and/or a downlink initial BWP used by the specific-type terminal according to the BWP-related information.

According to a sixth aspect of the embodiments of the disclosure, an apparatus for switching an initial BWP is provided. The apparatus includes a processing module, configured to perform BWP switching according to BWP-related information obtained from system information sent by the network device, in which the system information includes a MIB and/or an SIB1.

According to a seventh aspect of the embodiments of the disclosure, a communication device is provided, which includes: a transceiver; a memory; a processor connected to the transceiver and the memory respectively, configured to control the transceiver to receive and transmit a wireless signal and enable the method for configuring an initial BWP according to the first or second aspect, or the method for switching an initial BWP according to the third aspect is implemented, by executing computer executable instructions on the memory.

According to an eighth aspect of the embodiments of the disclosure, a computer storage medium storing computer executable instructions is provided. When the instructions are executed by a processor, the method for configuring an initial BWP according to the first or second aspect, or the method for switching an initial BWP according to the third aspect may be implemented.

The embodiments of the disclosure provide a method and apparatus for configuring an initial BWP, in which the network device sends BWP-related information to the terminal, indicating the downlink initial BWP and/or the uplink initial BWP of the specific-type terminal, so that the specific-type terminal may determine the downlink initial BWP and the uplink initial BWP based on the BWP-related information. As such, the initial BWP configuration for the specific-type terminal is achieved.

In addition, the embodiments of the disclosure provide a method and apparatus for switching an initial BWP. When there is no RACH on the current active BWP, uplink BWP switching and downlink BWP switching are performed according to the BWP-related information obtained from the network device. When the BWP inactivity timer on the current active BWP expires and the specific-type terminal is not configured with the default downlink BWP, downlink BWP switching is performed according to the BWP-related information obtained from the network device, so that the specific-type terminal may realize BWP switching.

Additional aspects and advantages of the disclosure will be given in part in the following description and in part will be obvious from the following description or learned through practice of the disclosure.

### BRIEF DESCRIPTION OF THE DRAWINGS

The above and/or additional aspects and advantages of the disclosure will become apparent and be easily understood from the following description of the embodiments in conjunction with the accompanying drawings.
FIG. 1 is an architecture diagram of a communication system according to embodiments of the disclosure.
FIG. 2 is a flowchart of a method for configuring an initial BWP according to embodiments of the disclosure.
FIG. 3 is a flowchart of a method for configuring an initial BWP according to embodiments of the disclosure.
FIG. 4 is a flowchart of a method for configuring an initial BWP according to embodiments of the disclosure.
FIG. 5 is a flowchart of a method for switching an initial BWP according to embodiments of the disclosure.
FIG. 6 is a flowchart of a method for switching an initial BWP according to embodiments of the disclosure.
FIG. 7 is a flowchart of a method for switching an initial BWP according to embodiments of the disclosure.
FIG. 8 is a block diagram of an apparatus for configuring an initial BWP according to embodiments of the disclosure.
FIG. 9 is a block diagram of an apparatus for configuring an initial BWP according to embodiments of the disclosure.
FIG. 10 is a block diagram of an apparatus for switching an initial BWP according to embodiments of the disclosure.
FIG. 11 is a structure diagram of a communication device according to embodiments of the disclosure.
FIG. 12 is a structure diagram of a chip according to embodiments of the disclosure.

### DETAILED DESCRIPTION

Embodiments of the disclosure are described in detail below, examples of which are shown in the accompanying drawings, throughout which the same or similar reference numerals represent the same or similar elements or elements having the same or similar functions. The embodiments described below with reference to the accompanying drawings are exemplary and are intended to be used to explain the disclosure, but should not be construed as limiting the disclosure.

In order to better understand, the method and the apparatus for configuring an initial bandwidth part (BWP), and the method and the apparatus for determining an initial BWP disclosed in the embodiments of the disclosure, a communication system to which the embodiments of the disclosure are applicable is first described below.

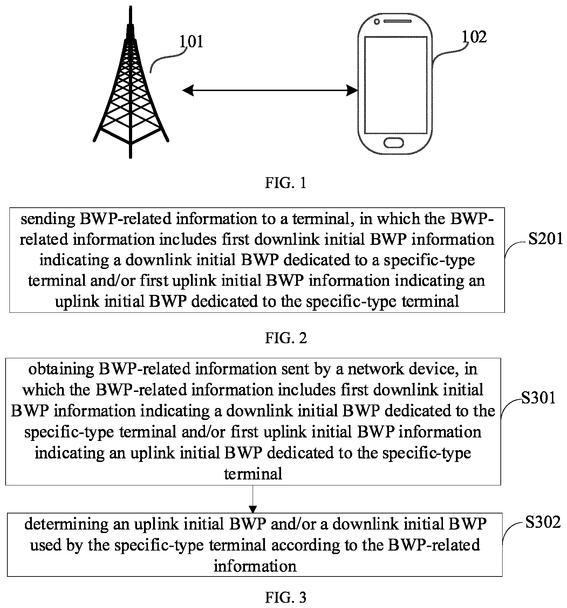

Referring to FIG. 1, it is an architecture diagram of a communication system according to embodiments of the disclosure. The communication system may include, but is not limited to, one network device and one user device. A number and a form of the devices shown in FIG. 1 are only for example and do not constitute a limitation to embodiments of the present disclosure, and two or more network devices and two or more user devices may be included in practical applications. The communication system 100 as illustrated in FIG. 1 includes one network device 101 and one user device 102 for example.

It needs to be noted that the technical solution in embodiments of the disclosure is applicable to various communication systems., for example, a long term evolution (LTE) system, a 5th generation (5G) mobile communication system, a 5G new radio (NR) system or other future new mobile communication systems.

The network device 101 in embodiments of the disclosure is an entity for transmitting or receiving a signal at a network side. For example, the network device 101 may be an evolved NodeB (eNB), a transmission reception point (TRP), a next generation NodeB (gNB) in a NR system, a base station in other future mobile communication systems, or an access node in a wireless fidelity (WiFi) system. A specific technology and a specific device form adopted by the network device are not limited in embodiments of the present disclosure. The network device according to embodiments of the present disclosure may consist of a central unit (CU) and a distributed unit (DU). The CU may also be referred to as a control unit. The protocol layers of a network device such as a base station may be split by using a structure of the CU-DU, so that the functions for a part of the protocol layers are placed in the CU for centralized control, and functions of a remaining part or all of the protocol layers are distributed in the DU, and the DU is centrally controlled by the CU.

The user device 102 in embodiments of the disclosure is an entity for receiving or transmitting a signal at a user side, for example, a mobile phone. The user device may be referred to as a user equipment (UE), a terminal, a mobile station (MS), a mobile terminal (MT), etc. The user device may be an automobile with a communication function, a smart automobile, a mobile phone, a wearable device, a tablet computer (Pad), a computer with a wireless transceiving function, a virtual reality (VR) terminal device, an augmented reality (AR) terminal device, a wireless terminal device in industrial control, a wireless terminal device in self-driving, a wireless terminal device in a remote medical surgery, a wireless terminal device in a smart grid, a wireless terminal device in transportation safety, a wireless terminal device in a smart home, etc. A specific technology adopted by the user device and a specific device form adopted by the user device are not limited in embodiments of the present disclosure.

It may be understood that, the communication system described in embodiments of the disclosure are intended to explain technical solutions of embodiments of the disclosure more clearly, and does not constitute a limitation to the technical solutions provided by embodiments of the present disclosure. Those skilled in the art know that, with evolution of a system architecture and emergence of a new business scenario, the technical solutions provided in embodiments of the present disclosure are equally applied to similar technical problems.

In the current 3rd Generation Partnership Project (3GPP) standardization, a new terminal type, namely, a reduced capability (Redcap)-type terminal, is proposed. For the Redcap-type terminal, how to configure an initial BWP and to which BWP the Redcap-type terminal should switch when the Redcap-type terminal needs to switch BWP during a random access channel (RACH) process are still issues that need to be resolved.

Therefore, the disclosure proposes a method and an apparatus for configuring an initial BWP, in which a network device sends BWP-related information to the terminal indicating a downlink initial BWP and/or an uplink initial BWP of a specific-type terminal (such as a Redcap-type terminal), so that the specific-type terminal may determine the downlink initial BWP and the uplink initial BWP based on the BWP-related information, thus achieving the initial BWP configuration for the specific-type terminal.

In addition, the disclosure provides a method and apparatus for switching an initial BWP. When there is no RACH on the current active BWP, uplink BWP switching and downlink BWP switching are performed according to the BWP-related information obtained from the network device. When the BWP inactivity timer on the current active BWP expires and the specific-type terminal is not configured with the default downlink BWP, downlink BWP switching is performed according to the BWP-related information obtained from the network device, so that the specific-type terminal may realize BWP switching.

The method and the apparatus for configuring an initial BWP, and the method and the apparatus for switching an initial BWP are described in detail below with reference to the accompanying drawings.

FIG. 2 is a flowchart of a method for configuring an initial BWP according to embodiments of the disclosure. As shown in FIG. 2, the method may be performed by a network device and includes the following step S201.

At S201, BWP-related information is sent to a terminal, in which the BWP-related information includes first downlink initial BWP information indicating a downlink initial BWP dedicated to a specific-type terminal with a reduced capability and/or first uplink initial BWP information indicating an uplink initial BWP dedicated to the specific-type terminal.

In some embodiments, the specific-type terminal refers to a Redcap-type terminal.

In some embodiments, BWP-related information is carried in an SIB1.

As an implementation, an information element (IE) item such as "DownlinkConfigCommonSIB-Redcap" is added in the SIB1 for the specific-type terminal.

As an example, a Broadcast Control Channel (BCCH) configuration for the specific-type terminal may be the same as the BCCH configuration for a common-type terminal. Therefore, there is no need to include a BCCH configuration field in the IE item. As another example, a BCCH configuration field may be included in the IE item to separately configure a BCCH for a specific-type terminal.

As an example, a physical control channel (PCCH) configuration for the specific-type terminal may be the same as the PCCH configuration for a common-type terminal. Therefore, there is no need to include the PCCH configuration field in the IE item. As another example, a PCCH configuration field may be included in the IE item to separately configure a PCCH for the specific-type terminal.

In some embodiments, when the BWP-related information includes first downlink initial BWP information indicating the downlink initial BWP dedicated to the specific-type terminal, the first downlink initial BWP information may have at least one of: a RAR search space, a paging search space, or other system message search space. As an example, the first downlink initial BWP information includes control resource set 0 (CORESET0), thus configuring at least one of the RAR search space, the paging search space or other system message search space.

In some embodiments, when the BWP-related information includes first downlink initial BWP information indicating a downlink initial BWP dedicated to the specific-type terminal, the first downlink initial BWP information may have a RAR search space or a paging search space. As an example, the first downlink initial BWP information does not include CORESETO, but only configures the RAR search space. As another example, the first downlink initial BWP information does not include CORESETO, but only configures the paging search space.

In some embodiments, when the BWP-related information includes first downlink initial BWP information indicating a downlink initial BWP dedicated to the specific-type terminal, the first downlink initial BWP information may configure a plurality of downlink initial BWPs on which there may be a RAR search space or a paging search space. For example, two downlink initial BWPs are configured, which include a paging search space for monitoring a paging message by the specific-type terminal.

In some embodiments, when the BWP-related information includes first downlink initial BWP information indicating a downlink initial BWP dedicated to the specific-type terminal and first uplink initial BWP information indicating an uplink initial BWP dedicated to the specific-type terminal, for an asymmetric spectrum, a center frequency point of the uplink initial BWP indicated by the first uplink initial BWP information is aligned with a center frequency point of the downlink initial BWP indicated by the first downlink initial BWP information.

According to the method for configuring an initial BWP in the embodiments of the disclosure, the network device sends the BWP-related information to the terminal indicating the downlink initial BWP and/or the uplink initial BWP of the specific-type terminal, so that the specific-type terminal may determine the downlink initial BWP and the uplink initial BWP based on the BWP-related information, thus achieving the initial BWP configuration for the specific-type terminal.

FIG. 3 is a flowchart of a method for configuring an initial BWP according to embodiments of the disclosure. As shown in FIG. 3, the method may be performed by a specific-type terminal, which may be a Redcap-type terminal, and the method for configuring an initial BWP may include the following steps S301-S302.

At S301, BWP-related information sent by a network device is obtained, in which the BWP-related information includes first downlink initial BWP information indicating a downlink initial BWP dedicated to the specific-type terminal and/or first uplink initial BWP information indicating an uplink initial BWP dedicated to the specific-type terminal.

In some embodiments, the above step S301 includes: obtaining BWP-related information from an SIB 1.

As an implementation, the SIB1 includes an information element (IE) item "DownlinkConfigCommonSIB-Redcap" for the specific-type terminal.

As an example, the IE item includes a BCCH configuration field used to configure a BCCH separately for the specific-type terminal. As another example, the BCCH configuration field is not included in the IE item, which means that the BCCH configuration for the specific-type terminal may be the same as the BCCH configuration for the common-type terminal. Therefore, the BCCH configuration for the common-type terminal may be reused.

As an example, the IE item includes a PCCH configuration field used to configure a PCCH separately for the specific-type terminal. As another example, the PCCH configuration field is not included in the IE item, which means that the PCCH configuration for the specific-type terminal may be the same as the PCCH configuration for the common-type terminal. Therefore, the PCCH configuration for the common-type terminal may be reused.

In some embodiments, when the BWP-related information includes first downlink initial BWP information indicating a downlink initial BWP dedicated to the specific-type terminal, the first downlink initial BWP information may have at least one of: a RAR search space, a paging search space, or other system message search space. As an example, the first downlink initial BWP information includes CORESETO, thus configuring at least one of the RAR search space, the paging search space or other system message search space.

In some embodiments, when the BWP-related information includes first downlink initial BWP information indicating a downlink initial BWP dedicated to the specific-type terminal, the first downlink initial BWP information may have a RAR search space or a paging search space. As an example, the first downlink initial BWP information does not include CORESETO, but only configures the RAR search space. As another example, the first downlink initial BWP information does not include CORESETO, but only configures the paging search space.

In some embodiments, when the BWP-related information includes first downlink initial BWP information indicating a downlink initial BWP dedicated to the specific-type terminal and first uplink initial BWP information indicating an uplink initial BWP dedicated to the specific-type terminal, for an asymmetric spectrum, a center frequency point of the uplink initial BWP indicated by the first uplink initial BWP information is aligned with a center frequency point of the downlink initial BWP indicated by the first downlink initial BWP information.

At S302, an uplink initial BWP and a downlink initial BWP used by the specific-type terminal are determined according to the BWP-related information

After obtaining the BWP-related information from the network device, the specific-type terminal may determine the uplink initial BWP and the downlink initial BWP used by the specific-type terminal according to the BWP-related information.

According to the method for configuring an initial BWP in the embodiments of the disclosure, the network device sends the BWP-related information to the terminal indicating the downlink initial BWP and/or the uplink initial BWP of the specific-type terminal, so that the specific-type terminal may determine the downlink initial BWP and the uplink initial BWP based on the BWP-related information, thereby achieving the initial BWP configuration for the specific-type terminal.

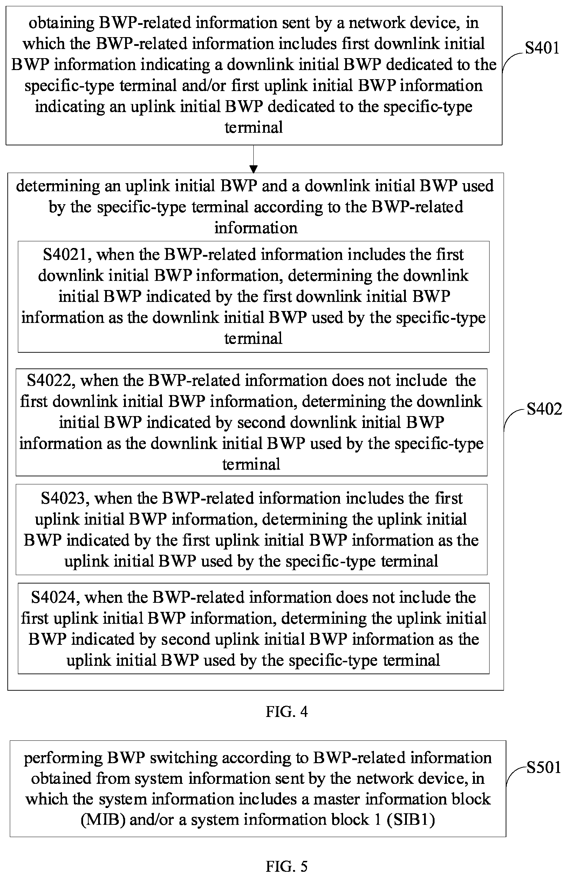

FIG. 4 is a flowchart of a method for configuring an initial BWP according to embodiments of the disclosure. This embodiment is based on the embodiment shown in FIG. 3. The method may be performed by a specific-type terminal, which may refer to a Redcap-type terminal. As shown in FIG. 4, the method for configuring an initial BWP may include the following steps S401-S402.

At S401, BWP-related information sent by a network device is obtained, in which the BWP-related information includes first downlink initial BWP information indicating a downlink initial BWP dedicated to the specific-type terminal and/or first uplink initial BWP information indicating an uplink initial BWP dedicated to the specific-type terminal.

For the description and specific details of the above step S401, reference may be made to the relevant description and details of the above step S301.

At S402, an uplink initial BWP and a downlink initial BWP used by the specific-type terminal are determined according to BWP-related information.

In some embodiments, the above step S402 may include any of the following steps S4021-S4024.

At S4021, when the BWP-related information includes first downlink initial BWP information, the downlink initial BWP indicated by the first downlink initial BWP information is determined as the downlink initial BWP used by the specific-type terminal.

When the BWP-related information includes first downlink initial BWP information indicating a downlink initial BWP dedicated to the specific-type terminal, the specific-type terminal may directly determine the downlink initial BWP indicated by the first downlink initial BWP information as the downlink initial BWP used by the specific-type terminal after obtaining the BWP-related information.

At S4022, when the BWP-related information does not include the first downlink initial BWP information, a downlink initial BWP indicated by second downlink initial BWP information is determined as the downlink initial BWP used by the specific-type terminal, in which the second downlink initial BWP information is included in the BWP-related information or the MIB, and the second downlink initial BWP information indicates a downlink initial BWP for the common-type terminal.

When the BWP-related information does not include the first downlink initial BWP information indicating the downlink initial BWP dedicated to the specific-type terminal, the downlink initial BWP for the common-type terminal indicated in the BWP-related information or the MIB may be determined as the downlink initial BWP used by the specific-type terminal.

As an example, when the downlink initial BWP for the common-type terminal indicated in the BWP-related information meets a bandwidth requirement of the specific-type terminal, the downlink initial BWP for the common-type terminal may be determined as the downlink initial BWP for the specific-type terminal.

As an example, when the downlink initial BWP for the common-type terminal indicated in the BWP-related information does not meet a bandwidth requirement of the specific-type terminal, the downlink initial BWP for the common-type terminal indicated in the MIB may be determined as the downlink initial BWP for the specific-type terminal.

At S4023, when the BWP-related information includes first uplink initial BWP information, the uplink initial BWP indicated by the first uplink initial BWP information is determined as the uplink initial BWP used by the specific-type terminal.

When the BWP-related information includes the first uplink initial BWP information indicating the uplink initial BWP dedicated to the specific-type terminal, the specific-type terminal may directly determine the downlink initial BWP indicated by the first uplink initial BWP information as the downlink initial BWP used by the specific-type terminal after obtaining the BWP-related information.

At S4024, when the BWP-related information does not include the first uplink initial BWP information, the uplink initial BWP indicated by second uplink initial BWP information is determined as the uplink initial BWP used by the specific-type terminal, in which the second downlink initial BWP information is included in the BWP-related information, and the second uplink initial BWP information indicates an uplink initial BWP for the common-type terminal.

When the BWP-related information does not include the first uplink initial BWP information indicating the downlink initial BWP dedicated to the specific-type terminal, the uplink initial BWP for the common-type terminal indicated in the BWP-related information may be determined as the uplink initial BWP used by the specific-type terminal.

As an example, when the uplink initial BWP for the common-type terminal indicated in the BWP-related information meets a bandwidth requirement of the specific-type terminal, the uplink initial BWP for the common-type terminal may be used as the uplink initial BWP for the specific-type terminal.

As an example, for a time division duplexing (TDD) system, when the center frequency of the uplink initial BWP for the common-type terminal indicated in the BWP-related information is aligned with the center frequency of the downlink initial BWP for the specific-type terminal indicated in the BWP-related information and meets a bandwidth requirement of the specific-type terminal, the uplink initial BWP for the common-type terminal may be used as the uplink initial BWP for the specific-type terminal.

According to the method for configuring an initial BWP in the embodiments of the disclosure, the network device sends the BWP-related information to the terminal indicating the downlink initial BWP and/or the uplink initial BWP of the specific-type terminal, so that the specific-type terminal may determine the downlink initial BWP and the uplink initial BWP based on the BWP-related information, thus achieving the initial BWP configuration for the specific-type terminal.

FIG. 5 is a flowchart of a method for switching an initial BWP according to embodiments of the disclosure. As shown in FIG. 5, the method may be performed by a specific-type terminal in a connected state, such as a Redcap-type terminal, and includes the following step S501.

At S501, BWP switching is performed according to BWP-related information obtained from system information sent from a network device. The system information includes a MIB and/or an SIB 1.

In the embodiment, the specific-type terminal obtains the BWP-related information from the MIB and/or the SIB 1 sent by the network device. The BWP-related information may be used to indicate a target BWP to which the specific-type terminal switches when performing BWP switching. Thus, the specific-type terminal may perform BWP switching according to the BWP-related information.

According to the method for switching an initial BWP in the embodiments of the disclosure, BWP switching is performed according to the BWP-related information obtained from the MIB or the SIB1 of the network device, so that the specific-type terminal may implement BWP switching.

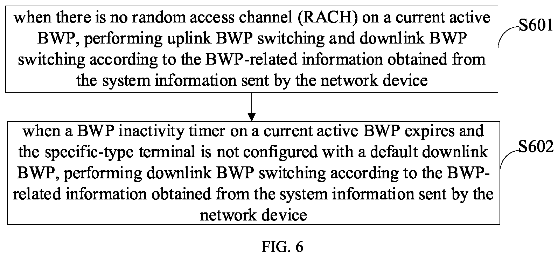

FIG. 6 is a flowchart of a method for switching an initial BWP according to embodiments of the disclosure. The embodiment is based on the embodiment shown in FIG. 5. The method may be performed by a specific-type terminal in a connected state. As shown in FIG. 6, the method for switching an initial BWP may include any of the following steps 5601-5602.

At S601, when there is no RACH on a current active BWP, uplink BWP switching and downlink BWP switching are performed according to the BWP-related information obtained from system information sent by the network device. The system information includes a MIB and/or an SIB 1.

When there is no RACH on the current active BWP, the specific-type terminal needs to perform uplink BWP switching and downlink BWP switching. In the embodiment, the specific-type terminal may perform uplink BWP switching and downlink BWP switching according to the BWP-related information obtained from the MIB and/or the SIB 1.

At S602, when a BWP inactivity timer on the current active BWP expires and the specific-type terminal is not configured with a default downlink BWP, downlink BWP switching is performed according to the BWP-related information obtained from system information sent by the network device. The system information includes a MIB and/or an SIB1.

When the BWP inactivity timer on the current active BWP expires and the specific-type terminal is not configured with the default downlink BWP, the specific-type terminal needs to perform downlink BWP switching. In the embodiment, the specific-type terminal may perform downlink BWP switching according to the BWP-related information obtained from the MIB and/or the SIB1.

According to the method for switching an initial BWP in the embodiments of the disclosure, when there is no RACH on the current active BWP, uplink BWP switching and downlink BWP switching are performed according to the BWP-related information obtained from the network device; when the BWP inactivity timer on the current active BWP expires and the specific-type terminal is not configured with the default downlink BWP, downlink BWP switching is performed according to the BWP-related information obtained from the network device, so that the specific-type terminal may achieve BWP switching.

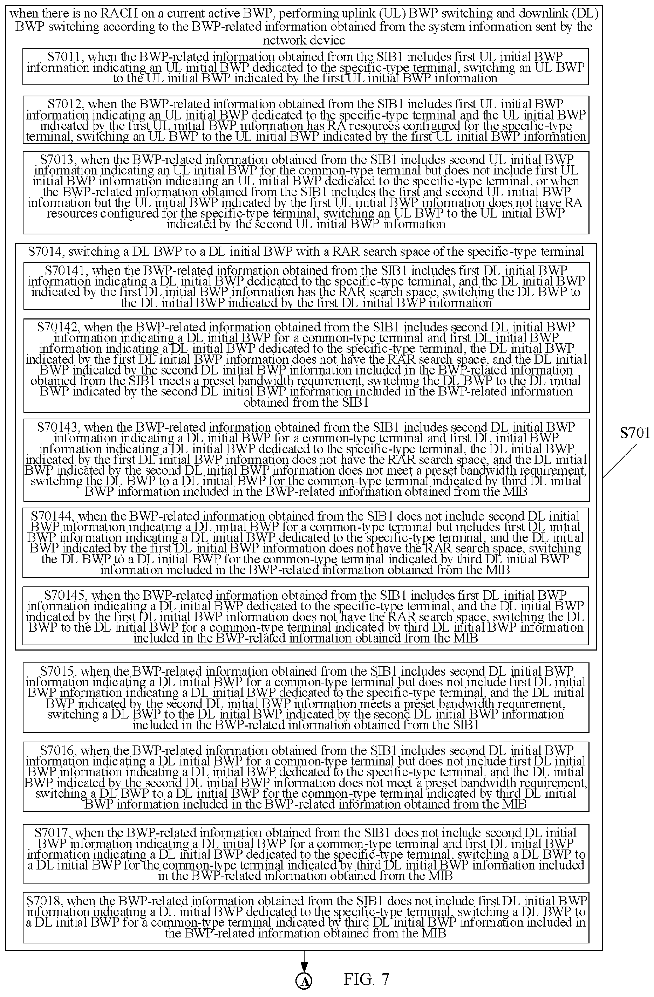

FIG. 7 is a flowchart of a method for switching an initial BWP according to embodiments of the disclosure. The embodiment is based on the embodiment shown in FIG. 6. The method may be performed by a specific-type terminal in a connected state. As shown in FIG. 7, the method for switching an initial BWP may include the following steps 5701-5702.

At S701, when there is no RACH on a current active BWP, uplink BWP switching and downlink BWP switching are performed according to the BWP-related information obtained from system information sent by the network device. The system information includes a MIB and/or an SIB 1.

In some embodiments, the above step S701 includes any of the following steps S7011-S7018.

When performing uplink BWP switching, the uplink BWP is switched to an uplink initial BWP having RA resources configured for the specific-type terminal. The following steps S7011-57013 describe the details of uplink BWP switching. That is, the uplink BWP switching may be implemented by any of the following steps 57011-57013.

At S7011, when the BWP-related information obtained from the SIB1 includes first uplink initial BWP information indicating an uplink initial BWP dedicated to the specific-type terminal, an uplink BWP is switched to the uplink initial BWP indicated by the first uplink initial BWP information.

In the embodiment, when the BWP-related information obtained from the SIB1 indicates an uplink initial BWP dedicated to the specific-type terminal, the specific-type terminal may directly switch the uplink BWP to the uplink initial BWP dedicated to the specific-type terminal indicated by the BWP-related information. In the embodiment, it is assumed that the BWP-related information obtained from the SIB1 indicates that the uplink initial BWP dedicated to the specific-type terminal has the RA resources configured for the specific-type terminal.

At S7012, when the BWP-related information obtained from the SIB1 includes first uplink initial BWP information indicating an uplink initial BWP dedicated to the specific-type terminal and the uplink initial BWP indicated by the first uplink initial BWP information has RA resources configured for the specific-type terminal, an uplink BWP is switched to the uplink initial BWP indicated by the first uplink initial BWP information.

When performing uplink BWP switching, the specific-type terminal may switch the uplink BWP to the uplink BWP of the RA resources specifically configured for the specific-type terminal. Therefore, when the BWP-related information obtained from the SIB1 indicates an uplink initial BWP dedicated to the specific-type terminal, it may be determined whether the uplink initial BWP dedicated to the specific-type terminal indicated by the BWP-related information has the RA resources configured for the specific-type terminal. When it is determined that the uplink initial BWP dedicated to the specific-type terminal indicated by the BWP-related information has the RA resources configured for the specific-type terminal, the specific-type terminal will switch the uplink BWP to the uplink initial BWP dedicated to the specific-type terminal indicated by the BWP-related information.

In an embodiment, assuming that the network configures a plurality of uplink BWPs of the RA resources configured for the specific-type terminal, the terminal may select one according to a rule, for example, select one randomly. When only one uplink BWP is configured, the terminal uses this one uplink BWP.

At S7013, when the BWP-related information obtained from the SIB1 includes second uplink initial BWP information indicating an uplink initial BWP for the common-type terminal but does not include first uplink initial BWP information indicating an uplink initial BWP dedicated to the specific-type terminal, or when the BWP-related information obtained from the SIB1 includes the first uplink initial BWP information and the second uplink initial BWP information but the uplink initial BWP indicated by the first uplink initial BWP information does not have RA resources configured for the specific-type terminal, an uplink BWP is switched to the uplink initial BWP indicated by the second uplink initial BWP information.

In the embodiment, when the BWP-related information obtained from the SIB1 does not indicate the uplink initial BWP dedicated to the specific-type terminal but only indicates the uplink initial BWP for the common-type terminal, the specific-type terminal may switch the uplink BWP to the uplink initial BWP for the common-type terminal indicated by the BWP-related information.

Alternatively, when performing uplink BWP switching, the specific-type terminal may switch the uplink BWP to the uplink BWP of the RA resources specifically configured for the specific-type terminal. Therefore, when the BWP-related information obtained from the SIB1 indicates both the uplink initial BWP for the common-type terminal and the uplink initial BWP dedicated to the specific-type terminal, it may be determined whether the uplink initial BWP dedicated to the specific-type terminal indicated by the BWP-related information has the RA resources configured for the specific-type terminal. When it is determined that the uplink initial BWP dedicated to the specific-type terminal indicated by the BWP-related information does not have the RA resources configured for the specific-type terminal, the specific-type terminal switches the uplink BWP to the uplink initial BWP dedicated to the specific-type terminal indicated by the BWP-related information.

Preferably, when performing uplink BWP switching, if the BWP-related information obtained from the SIB 1 indicates an uplink initial BWP dedicated to the specific-type terminal, the specific-type terminal switches the uplink BWP to the uplink initial BWP dedicated to the specific-type terminal, else, the specific-type terminal switches the uplink BWP to the uplink initial BWP for the common-type terminal, a pseudo code example of which is as follows:

```
     For a specific-type terminal:
     If SIB1 indicates an uplink initial BWP for the specific-type terminal,
     the uplink BWP is switched to the
indicated uplink initial BWP for the specific-type terminal;
     Else,
     the uplink BWP is switched to the uplink initial BWP for a common-type terminal indicated by
 SIB1.
```

When performing downlink BWP switching, the downlink BWP is switched to a downlink initial BWP with an RAR search space for the specific-type terminal. The following steps S7014-S7018 describe the details of the downlink BWP switching. That is, the downlink BWP switching may be implemented by any of the following steps S7014-S7018.

At S7041, a downlink BWP is switched to a downlink initial BWP with a RAR search space of the specific-type terminal.

Specifically, the above step S7014 may be implemented by any of the following steps S70141-S70145.

At S70141, when the BWP-related information obtained from the SIB1 includes first downlink initial BWP information indicating a downlink initial BWP dedicated to the specific-type terminal, and the downlink initial BWP indicated by the first downlink initial BWP information has the RAR search space, the downlink BWP is switched to the downlink initial BWP indicated by the first downlink initial BWP information.

In the embodiment, when the BWP-related information obtained from the SIB1 indicates a downlink initial BWP with an RAR search space dedicated to the specific-type terminal, regardless of whether the BWP-related information obtained from the SIB1 indicates a downlink initial BWP for the common-type terminal, the specific-type terminal may directly switch the downlink BWP to the downlink initial BWP with the RAR search space for the specific-type terminal indicated by the BWP-related information.

In an embodiment, assuming that the network configures a plurality of downlink initial BWPs with the RAR search space configured for the specific-type terminal, the terminal may select one downlink initial BWP according to a rule. For example, the terminal selects a downlink initial BWP paired with an uplink initial BWP of RA resources configured for the specific-type terminal is selected. If only one downlink initial BWP is configured, the terminal uses this one downlink initial BWP. As a preferred embodiment, when the network configures a separate uplink initial BWP for the specific-type terminal on which RA resources are configured, the network will also configure for the specific-type terminal, a separate downlink initial BWP on which a RAR search space is included.

At S70142, when the BWP-related information obtained from the SIB1 includes second downlink initial BWP information indicating a downlink initial BWP for a common-type terminal and first downlink initial BWP information indicating a downlink initial BWP dedicated to the specific-type terminal, the downlink initial BWP indicated by the first downlink initial BWP information does not have the RAR search space, and the downlink initial BWP indicated by the second downlink initial BWP information included in the BWP-related information obtained from the SIB1 meets a preset bandwidth requirement, the downlink BWP is switched to the downlink initial BWP indicated by the second downlink initial BWP information included in the BWP-related information obtained from the SIB1. The preset bandwidth requirement is met, meaning that the bandwidth may not be greater than a maximum bandwidth supported by the specific-type terminal.

In the embodiment, when the BWP-related information obtained from the SIB1 indicates the downlink initial BWP dedicated to the specific-type terminal but without the RAR search space, and indicates the downlink initial BWP for the common-type terminal that meets the preset bandwidth requirement of the specific-type terminal, the specific-type terminal may switch the downlink BWP to the downlink initial BWP for the common-type terminal indicated by the BWP-related information.

At S70143, when the BWP-related information obtained from the SIB1 includes second downlink initial BWP information indicating a downlink initial BWP for a common-type terminal and first downlink initial BWP information indicating w downlink initial BWP dedicated to the specific-type terminal, the downlink initial BWP indicated by the first downlink initial BWP information does not have the RAR search space, and the downlink initial BWP indicated by the second downlink initial BWP information included in the BWP-related information obtained from the SIB1 does not meet a preset bandwidth requirement, the downlink BWP is switched to a downlink initial BWP for the common-type terminal indicated by third downlink initial BWP information included in the BWP-related information obtained from the MIB.

In the embodiment, when the BWP-related information obtained from the SIB1 indicates the downlink initial BWP dedicated to the specific-type terminal but without the RAR search space, and indicates the downlink initial BWP for the common-type terminal but does not meet the preset bandwidth requirement of the specific-type terminal, the specific-type terminal may switch the downlink BWP to the downlink initial BWP for the common-type terminal indicated by the BWP-related information obtained from the MIB.

At S70144, when the BWP-related information obtained from the SIB1 does not include second downlink initial BWP information indicating a downlink initial BWP for a common-type terminal but includes first downlink initial BWP information indicating a downlink initial BWP dedicated to the specific-type terminal, and the downlink initial BWP indicated by the first downlink initial BWP information does not have the RAR search space, the downlink BWP is switched to a downlink initial BWP for the common-type terminal indicated by third downlink initial BWP information included in the BWP-related information obtained from the MIB.

In the embodiment, when the BWP-related information obtained from the SIB1 indicates the downlink initial BWP dedicated to the specific-type terminal but without the RAR search space, but does not indicate the downlink initial BWP for the common-type terminal, the specific-type terminal may switch the downlink BWP to the downlink initial BWP for the common-type terminal indicated by the BWP-related information obtained from the MIB.

At S70145, when the BWP-related information obtained from the SIB1 includes first downlink initial BWP information indicating a downlink initial BWP dedicated to the specific-type terminal, and the downlink initial BWP indicated by the first downlink initial BWP information does not have the RAR search space, the downlink BWP is switched to the downlink initial BWP for a common-type terminal indicated by third downlink initial BWP information included in the BWP-related information obtained from the MIB.

In the embodiment, when the BWP-related information obtained from the SIB1 indicates the downlink initial BWP dedicated to the specific-type terminal but without the RAR search space, regardless of whether the BWP-related information obtained from the SIB1 indicates the downlink initial BWP for the common-type terminal, the specific-type terminal may switch the downlink BWP to the downlink initial BWP for the common-type terminal indicated by the BWP-related information obtained from the MIB.

At S7015, when the BWP-related information obtained from the SIB1 includes second downlink initial BWP information indicating a downlink initial BWP for a common-type terminal but does not include first downlink initial BWP information indicating a downlink initial BWP dedicated to the specific-type terminal, and the downlink initial BWP indicated by the second downlink initial BWP information included in the BWP-related information obtained from the SIB1 meets a preset bandwidth requirement, a downlink BWP is switched to the downlink initial BWP indicated by the second downlink initial BWP information included in the BWP-related information obtained from the SIB1.

In the embodiment, when the BWP-related information obtained from the SIB 1 only indicates the downlink initial BWP for the common-type terminal that meets the preset bandwidth requirement of the specific-type terminal, but does not indicate the downlink initial BWP dedicated to the specific-type terminal, the specific-type terminal may switch the downlink BWP to the downlink initial BWP for the common-type terminal indicated by the BWP-related information obtained from the SIB 1.

At S7016, when the BWP-related information obtained from the SIB1 includes second downlink initial BWP information indicating a downlink initial BWP for a common-type terminal but does not include first downlink initial BWP information indicating a downlink initial BWP dedicated to the specific-type terminal, and the downlink initial BWP indicated by the second downlink initial BWP information included in the BWP-related information obtained from the SIB1 does not meet a preset bandwidth requirement, a downlink BWP is switched to a downlink initial BWP for the common-type terminal indicated by third downlink initial BWP information included in the BWP-related information obtained from the MIB.

In the embodiment, when the BWP-related information obtained from the SIB 1 only indicates the downlink initial BWP for the common-type terminal but does not meet the preset bandwidth requirement of the specific-type terminal, but does not indicate the downlink initial BWP dedicated to the specific-type terminal, the specific-type terminal may switch the downlink BWP to the downlink initial BWP for the common-type terminal indicated by the BWP-related information obtained from the MIB.

At S7017, when the BWP-related information obtained from the SIB 1 does not include second downlink initial BWP information indicating a downlink initial BWP for a common-type terminal and first downlink initial BWP information indicating a downlink initial BWP dedicated to the specific-type terminal, a downlink BWP is switched to a downlink initial BWP for the common-type terminal indicated by third downlink initial BWP information included in the BWP-related information obtained from the MIB.

In the embodiment, when the BWP-related information obtained from the SIB1 does not indicate the downlink initial BWP dedicated to the specific-type terminal and does not indicate the downlink initial BWP for the common-type terminal, the specific-type terminal may switch the downlink BWP to the downlink initial BWP for the common-type terminal indicated by the BWP-related information obtained from the MIB.

At S7018, when the BWP-related information obtained from the SIB1 does not include first downlink initial BWP information indicating a downlink initial BWP dedicated to the specific-type terminal, a downlink BWP is switched to a downlink initial BWP for the common-type terminal indicated by third downlink initial BWP information included in the BWP-related information obtained from the MIB.

In the embodiment, when the BWP-related information obtained from the SIB1 does not indicate the downlink initial BWP dedicated to the specific-type terminal, regardless of whether the BWP-related information obtained from the SIB 1 indicates the downlink initial BWP for the common-type terminal, the specific-type terminal may switch the downlink BWP to the downlink initial BWP for the common-type terminal indicated by the BWP-related information obtained from the MIB.

As a preferred implementation, when performing downlink BWP switching, if the BWP-related information obtained from the SIB1 indicates a downlink initial BWP dedicated to the specific-type terminal and the downlink initial BWP is configured with the RAR search space, the specific-type terminal switches the downlink BWP to the downlink initial BWP dedicated to the specific-type terminal; else if the BWP-related information obtained from the SIB1 indicates a downlink initial BWP for the common-type terminal and the downlink initial BWP meets a preset bandwidth requirement of the specific-type terminal, the specific-type terminal switches the downlink BWP to the downlink initial BWP for the common-type terminal indicated by the BWP-related information obtained from the SIB 1; else, the specific-type terminal switches the downlink BWP to the downlink initial BWP for the common-type terminal indicated by the BWP-related information obtained from the MIB, a pseudo code example of which is as follows:

```
     For a specific-type terminal:
     if SIB1 indicates a downlink initial BWP
 for the specific-type terminal and the downlink initial
 BWP for the specific-type terminal has a RAR search space,
     the downlink BWP is switched to the indicated downlink initial BWP for the specific-type
 terminal;
        Else if SIB1 indicates a downlink initial BWP for a common-type terminal and the downlink
 initial BWP for the common-type terminal meets
a bandwidth requirement of the specific-type terminal,
        the downlink BWP is switched to the indicated downlink initial BWP for the common-type
 terminal;
     Else
     the downlink BWP is switched to the downlink initial BWP indicated by the MIB.
```

As another preferred implementation, when performing downlink BWP switching, if the BWP-related information obtained from the SIB1 indicates a downlink initial BWP dedicated to the specific-type terminal and the downlink initial BWP is configured with an RAR search space, the specific-type terminal switches the downlink BWP to the downlink initial BWP dedicated to the specific-type terminal; else, the specific-type terminal switches the downlink BWP to a downlink initial BWP for the common-type terminal indicated by the BWP-related information obtained from the MIB, a pseudo code example of which is as follows:

```
     For a specific-type terminal:
     if SIB1 indicates a downlink initial BWP for
 the specific-type terminal and the downlink initial
 BWP for the specific-type terminal has a RAR search space,
     the downlink BWP is switched to the indicated downlink initial BWP for the specific-type
 terminal;
         Else
     the downlink BWP is switched to a downlink initial BWP indicated by the MIB.
```

At 702, when a BWP inactivity timer on the current active BWP expires and the specific-type terminal is not configured with a default downlink BWP, downlink BWP switching is performed according to the BWP-related information obtained from system information sent by the network device. The system information includes a MIB and/or an SIB1.

In some embodiments, the above step S702 includes any of the following steps S7021-S7025.

At S7021, when the BWP-related information obtained from the SIB 1 includes first downlink initial BWP information indicating a downlink initial BWP dedicated to the specific-type terminal, a downlink BWP is switched to the downlink initial BWP indicated by the first downlink initial BWP information.

In an embodiment, assuming that the network configures a plurality of downlink initial BWPs for the specific-type terminal, the terminal may select one downlink initial BWP according to a rule, for example, select one downlink initial BWP randomly or by priority. For example, if there is both a downlink initial BWP configured with an RAR search space and a downlink initial BWP configured with a paging search space, the downlink initial BWP configured with the RAR search space is preferred. Assuming only one downlink initial BWP is configured, the terminal uses this one downlink initial BWP.

In the embodiment, when the BWP-related information obtained from the SIB1 indicates the downlink initial BWP dedicated to the specific-type terminal, regardless of whether the BWP-related information obtained from the SIB1 indicates a downlink initial BWP for the common-type terminal, the specific-type terminal may directly switch the downlink BWP to the downlink initial BWP for the specific-type terminal indicated by the BWP-related information.

At S7022, when the BWP-related information obtained from the SIB1 includes second downlink initial BWP information indicating a downlink initial BWP for a common-type terminal but does not include first downlink initial BWP information indicating a downlink initial BWP dedicated to the specific-type terminal, and the downlink initial BWP indicated by the second downlink initial BWP information included in the BWP-related information obtained from the SIB1 meets a preset bandwidth requirement, a downlink BWP is switched to the downlink initial BWP indicated by the second downlink initial BWP information included in the BWP-related information obtained from the SIB1.

In the embodiment, when the BWP-related information obtained from the SIB 1 only indicates the downlink initial BWP for the common-type terminal and that meets the preset bandwidth requirement of the specific-type terminal, but does not indicate the downlink initial BWP dedicated to the specific-type terminal, the specific-type terminal may switch the downlink BWP to the downlink initial BWP for the common-type terminal indicated by the BWP-related information obtained from the SIB1.

At S7023, when the BWP-related information obtained from the SIB1 includes second downlink initial BWP information indicating a downlink initial BWP for a common-type terminal but does not include first downlink initial BWP information indicating a downlink initial BWP dedicated to the specific-type terminal, and the downlink initial BWP indicated by the second downlink initial BWP information included in the BWP-related information obtained from the SIB1 does not meet the preset bandwidth requirement, a downlink BWP is switched to a downlink initial BWP for the common-type terminal indicated by third downlink initial BWP information included in the BWP-related information obtained from the MIB.

In the embodiment, when the BWP-related information obtained from the SIB 1 only indicates the downlink initial BWP for the common-type terminal but does not meet the preset bandwidth requirement of the specific-type terminals, but does not indicate the downlink initial BWP dedicated to the specific-type terminals, the specific-type terminal may switch the downlink BWP to the downlink initial BWP for the common-type terminal indicated by the BWP-related information obtained from the MIB.

At S7024, when the BWP-related information obtained from the SIB 1 does not include second downlink initial BWP information indicating a downlink initial BWP for a common-type terminal and first downlink initial BWP information indicating a downlink initial BWP dedicated to the specific-type terminal, a downlink BWP is switched to a downlink initial BWP for the common-type terminal indicated by third downlink initial BWP information included in the BWP-related information obtained from the MIB.

In the embodiment, when the BWP-related information obtained from the SIB1 does not indicate the downlink initial BWP dedicated the a specific-type terminal and does not indicate the downlink initial BWP for the common-type terminal, the specific-type terminal may directly switch the downlink BWP to the downlink initial BWP for the common-type terminal indicated by the BWP-related information obtained from the MIB.

At S7025, when the BWP-related information obtained from the SIB1 does not include first downlink initial BWP information indicating a downlink initial BWP dedicated to the specific-type terminal, a downlink BWP is switched to a downlink initial BWP for the common-type terminal indicated by third downlink initial BWP information included in the BWP-related information obtained from the MIB.

In the embodiment, when the BWP-related information obtained from the SIB1 does not indicate the downlink initial BWP dedicated to the specific-type terminal, regardless of whether the BWP-related information obtained from the SIB 1 indicates the downlink initial BWP for the common-type terminal, the specific-type terminal may directly switch the downlink BWP to the downlink initial BWP for the common-type terminal indicated by the BWP-related information obtained from the MIB.

As a preferred implementation, when performing downlink BWP switching, if the BWP-related information obtained from the SIB1 indicates a downlink initial BWP dedicated to the specific-type terminal, the specific-type terminal switches a downlink BWP to the downlink initial BWP dedicated to the specific-type terminal; else if the BWP-related information obtained from the SIB 1 indicates a downlink initial BWP for a common-type terminal and the downlink initial BWP meets a preset bandwidth requirement of the specific-type terminal, the specific-type terminal switches the downlink BWP to the downlink initial BWP for the common-type terminal indicated by the BWP-related information obtained from the SIB 1; else, the specific-type terminal switches the downlink BWP to the downlink initial BWP for the common-type terminal indicated by the BWP-related information obtained from the MIB, a pseudo code example of which is as follows:

```
     For a specific-type terminal (if the inactivity
 timer on the current active BWP expires and
 it is not configured with a default downlink initial BWP):
     if SIB1 indicates a downlink initial BWP for the specific-type terminal,
     the downlink BWP is switched to the indicated downlink initial BWP for the specific-type
 terminal;
         Else if SIB 1 indicates a downlink initial
BWP for the common-type terminal and the downlink
 initial BWP for the common-type terminal meets
a bandwidth requirement of the specific-type terminal,
 
         the downlink BWP is switched to the indicated downlink initial BWP for the common-type
 terminal;
     Else
     the downlink BWP is switched to the downlink initial BWP indicated by the MIB.
```

As another preferred implementation, when performing downlink BWP switching, if the BWP-related information obtained from the SIB1 indicates a downlink initial BWP dedicated to the specific-type terminal, the specific-type terminal switches the downlink BWP to the downlink initial BWP dedicated to the specific-type terminal; else, the specific-type terminal switches the downlink BWP to a downlink initial BWP for a common-type terminal indicated by the BWP-related information obtained from the MIB, a pseudo code example of which is as follows:

```
     For a specific-type terminal (if the inactivity
timer on the current active BWP expires and it is not
 
 configured with a default downlink initial BWP):
     if SIB1 indicates a downlink initial BWP for the specific-type terminal,
     the downlink BWP is switched to the indicated downlink initial BWP for the specific-type
 terminal;
     Else
     the downlink BWP is switched to the downlink initial BWP indicated by the MIB.
```

According to the method for switching an initial BWP in the embodiments of the disclosure, when there is no RACH on the current active BWP, uplink BWP switching and downlink BWP switching are performed according to the BWP-related information obtained from the network device; when the BWP inactivity timer on the current active BWP expires and the specific-type terminal is not configured with the default downlink BWP, downlink BWP switching is performed according to the BWP-related information obtained from the network device, so that the specific-type terminal may achieve BWP switching.

As a kind of implementation logic:
in the above-mentioned embodiments of the disclosure, the methods according to the embodiments of the disclosure are introduced from the perspectives of a network device and a user device respectively. In order to implement the various functions in the method according to the above embodiments of the disclosure, the network device and the user device may include a hardware structure and a software module to implement the above-mentioned functions in the form of a hardware structure, a software module, or a hardware structure plus a software module. Any of the above functions may be implemented in the form of hardware structure, software module, or hardware structure plus software module.

Corresponding to the method for configuring an initial BWPs according to the above-mentioned embodiments, the disclosure also provides an apparatus for configuring an initial BWP. Since the apparatus for configuring an initial BWP according to the embodiments of the disclosure corresponds to the method for configuring an initial BWPs according to the above embodiments, the implementations of the methods for configuring an initial BWP are also applicable to the apparatus for configuring an initial BWP according to the embodiments, which will not be described in detail.

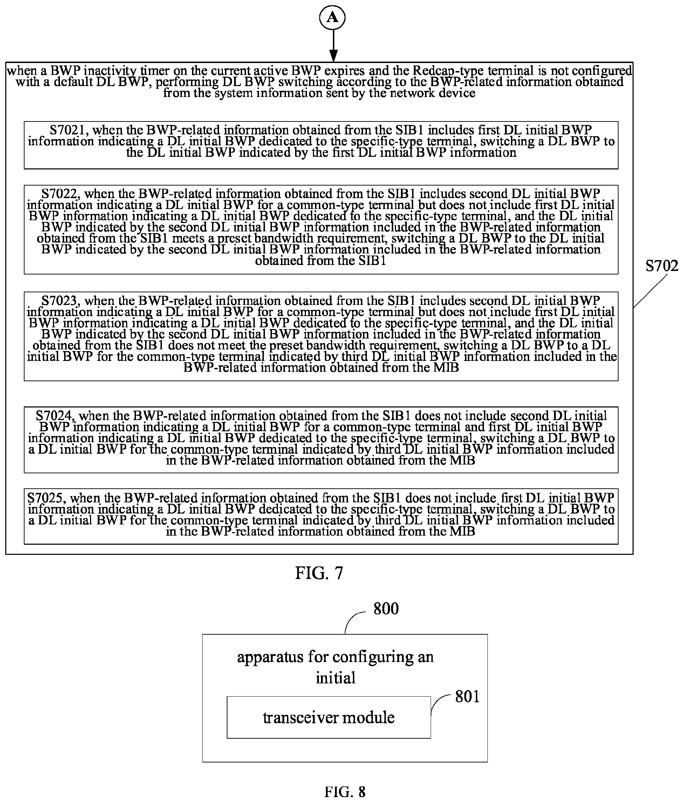

FIG. 8 is a block diagram of an apparatus for configuring an initial BWP according to embodiments of the disclosure.

As illustrated in FIG. 8, the apparatus 800 may include a transceiver module 801.

The transceiver module 801 is configured to send BWP-related information to a terminal. The BWP-related information includes first downlink initial BWP information indicating a downlink initial BWP dedicated to a specific-type terminal and/or first uplink initial BWP information indicating an uplink initial BWP dedicated to the specific-type terminal.

According to the apparatus for configuring an initial BWP according to the embodiments of the disclosure, the network device sends the BWP-related information indicating the downlink initial BWP and/or uplink initial BWP of the specific-type terminal to the terminal, so that the specific terminal may determine the downlink initial BWP and the uplink initial BWP according to the BWP-related information, thus achieving the initial BWP configuration for the specific-type terminal.

In some embodiments, for an asymmetric spectrum, a center frequency point of the uplink initial BWP indicated by the first uplink initial BWP information is aligned with a center frequency point of the downlink initial BWP indicated by the first downlink initial BWP information.

In some embodiments, the first downlink initial BWP information has at least one of a RAR search space, a paging search space, or other system message search space.

In some embodiments, the first downlink initial BWP information only has a RAR search space or a paging search space.

In some embodiments, the BWP-related information is carried in an SIB1.

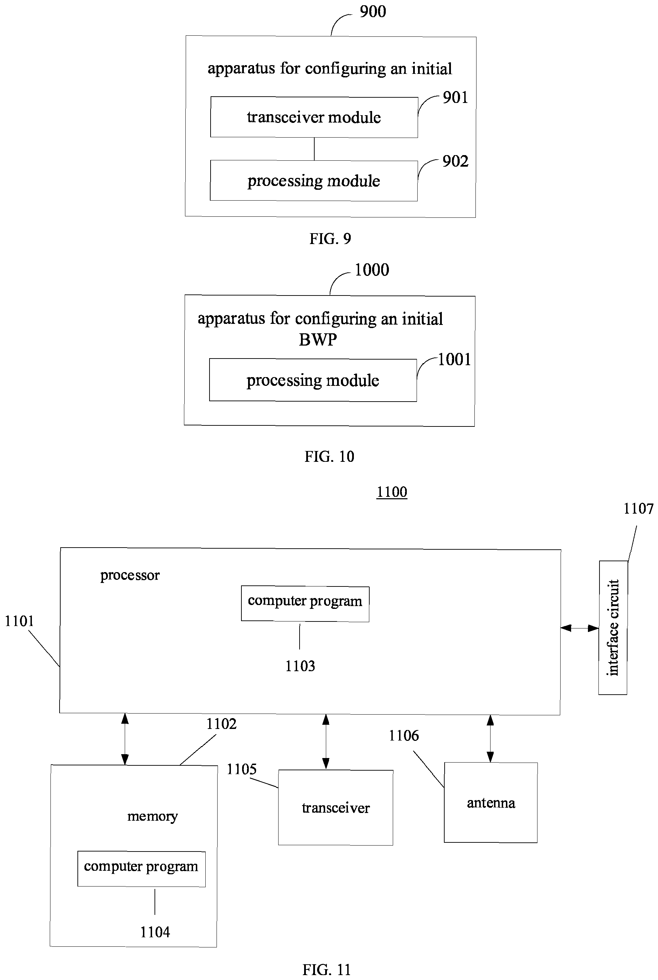

FIG. 9 is a block diagram of an apparatus 900 for configuring an initial BWP according to embodiments of the disclosure.

As illustrated in FIG. 9, the apparatus 900 may include a transceiver module 901 and a processing module 902.

The transceiver module 901 is configured to obtain BWP-related information sent by a network device. The BWP-related information includes first downlink initial BWP information indicating a downlink initial BWP dedicated to the specific-type terminal and/or first uplink initial BWP information indicating an uplink initial BWP dedicated to the specific-type terminal.

The processing module is configured to determine an uplink initial BWP and a downlink initial BWP used by the specific-type terminal according to the BWP-related information.

According to the apparatus for configuring an initial BWP according to the embodiments of the disclosure, the network device sends the BWP-related information indicating the downlink initial BWP and/or the uplink initial BWP of the specific-type terminal to the terminal, so that the specific terminal may determine the downlink initial BWP and the uplink initial BWP according to the BWP-related information, thus achieving the initial BWP configuration for the specific-type terminal.

In some embodiments, the processing module 902 is configured to: when the BWP-related information includes first downlink initial BWP information, determine the downlink initial BWP indicated by the first downlink initial BWP information as the downlink initial BWP used by the specific-type terminal; or when the BWP-related information does not include the first downlink initial BWP information, determine the downlink initial BWP indicated by second downlink initial BWP information as the downlink initial BWP used by the specific-type terminal, in which the second downlink initial BWP information is included in the BWP-related information or a MIB, and the second downlink initial BWP information indicates the downlink initial BWP for a common-type terminal.

In some embodiments, the processing module 902 is configured to: when the BWP-related information includes the first uplink initial BWP information, determine the uplink initial BWP indicated by the first uplink initial BWP information as the uplink initial BWP used by the specific-type terminal; or when the BWP-related information does not include the first uplink initial BWP information, determine the uplink initial BWP indicated by second uplink initial BWP information as the uplink initial BWP used by the specific-type terminal, I which the second uplink initial BWP information is included in the BWP-related information, and the second uplink initial BWP information indicates an uplink initial BWP for a common-type terminal.

In some embodiments, the transceiver module 901 is configured to obtain the BWP-related information from an SIB 1.

Corresponding to the methods for switching an initial BWP according to the above embodiments, the disclosure also provides an apparatus for switching an initial BWP. Since the apparatus for switching an initial BWP according to the embodiments of the disclosure corresponds to the methods for switching an initial BWPs according to the above embodiments, the implementations of the methods for switching an initial BWP are also applicable to the apparatus for switching an initial BWP according to the embodiments, which will not be described in detail.

FIG. 10 is a block diagram of an apparatus for switching an initial BWP according to embodiments of the disclosure.

As shown in FIG. 10, the apparatus 1000 may include a processing module 1001.

The processing module 1001 may be configured to perform BWP switching according to BWP-related information obtained from system information sent from a network device. The system information includes a MIB and/or an SIB 1.

According to the apparatus for switching an initial BWP according to the embodiments of the disclosure, BWP switching is performed according to the BWP-related information obtained from the MIB and/or the SIB1 of the network device, so that the specific-type terminal may achieve BWP switching.

In some embodiments, the processing module 1001 is configured to: when there is no RACH on a current active BWP, perform uplink BWP switching and downlink BWP switching according to the BWP-related information obtained from the system information; or when a BWP inactivity timer on a current active BWP expires and the specific-type terminal is not configured with a default downlink BWP, perform downlink BWP switching according to the BWP-related information obtained from the system information.

In some embodiments, the processing module 1001 is configured to: when the BWP-related information obtained from the SIB1 includes first uplink initial BWP information indicating an uplink initial BWP dedicated to the specific-type terminal, switch an uplink BWP to the uplink initial BWP indicated by the first uplink initial BWP information.

In some embodiments, when the BWP-related information obtained from the SIB1 includes first uplink initial BWP information indicating an uplink initial BWP dedicated to the specific-type terminal and the uplink initial BWP indicated by the first uplink initial BWP information has RA resources configured for the specific-type terminal, an uplink BWP is switched to the uplink initial BWP indicated by the first uplink initial BWP information.

In some embodiments, when the BWP-related information obtained from the SIB1 includes second uplink initial BWP information indicating an uplink initial BWP for a common-type terminal but does not include first uplink initial BWP information indicating an uplink initial BWP dedicated to the specific-type terminal, or when the BWP-related information obtained from the SIB1 includes the first uplink initial BWP information and the second uplink initial BWP information but the uplink initial BWP indicated by the first uplink initial BWP information does not have RA resources configured for the specific-type terminal, an uplink BWP is switched to the uplink initial BWP indicated by the second uplink initial BWP information.

In some embodiments, the processing module 1001 is configured to: switch a downlink BWP to a downlink initial BWP having a RAR search space of the specific-type terminal.

In some embodiments, the processing module 1001 is configured to: when the BWP-related information obtained from the SIB1 includes first downlink initial BWP information indicating a downlink initial BWP dedicated to the specific-type terminal, and the downlink initial BWP indicated by the first downlink initial BWP information has the RAR search space, switch the downlink BWP to the downlink initial BWP indicated by the first downlink initial BWP information.

In some embodiments, the processing module 1001 is configured to: when the BWP-related information obtained from SIB1 the includes second downlink initial BWP information indicating a downlink initial BWP for a common-type terminal and first downlink initial BWP information indicating a downlink initial BWP dedicated to the specific-type terminal, the downlink initial BWP indicated by the first downlink initial BWP information does not have the RAR search space, and the downlink initial BWP indicated by the second downlink initial BWP information included in the BWP-related information obtained from the SIB1 meets a preset bandwidth requirement, the downlink BWP is switched to the downlink initial BWP indicated by the second downlink initial BWP information included in the BWP-related information obtained from the SIB1.

In some embodiments, the processing module 1001 is configured to: when the BWP-related information obtained from the SIB1 includes second downlink initial BWP information indicating a downlink initial BWP for a common-type terminal and first downlink initial BWP information indicating a downlink initial BWP dedicated to the specific-type terminal, the downlink initial BWP indicated by the first downlink initial BWP information does not have the RAR search space, and the downlink initial BWP indicated by the second downlink initial BWP information included in the BWP-related information obtained from the SIB 1 does not meet a preset bandwidth requirement, the downlink BWP is switched to a downlink initial BWP for the common-type terminal indicated by third downlink initial BWP information included in the BWP-related information obtained from the MIB.

In some embodiments, the processing module 1001 is configured to: when the BWP-related information obtained from the SIB1 does not include second downlink initial BWP information indicating a downlink initial BWP for a common-type terminal but includes first downlink initial BWP information indicating a downlink initial BWP dedicated to the specific-type terminal, and the downlink initial BWP indicated by the first downlink initial BWP information does not have the RAR search space, switch the downlink BWP to a downlink initial BWP for the common-type terminal indicated by third downlink initial BWP information included in the BWP-related information obtained from the MIB.

In some embodiments, the processing module 1001 is configured to: when the BWP-related information obtained from the SIB1 includes first downlink initial BWP information indicating a downlink initial BWP dedicated to the specific-type terminal, and the downlink initial BWP indicated by the first downlink initial BWP information does not have the RAR search space, switch the downlink BWP to a downlink initial BWP for the common-type terminal indicated by third downlink initial BWP information included in the BWP-related information obtained from the MIB.

In some embodiments, the processing module 1001 is configured to: when the BWP-related information obtained from the SIB1 includes first downlink initial BWP information indicating a downlink initial BWP dedicated to the specific-type terminal, switch the downlink BWP to the downlink initial BWP indicated by the first downlink initial BWP information.

In some embodiments, the processing module 1001 is configured to: when the BWP-related information obtained from the SIB1 includes second downlink initial BWP information indicating a downlink initial BWP for a common-type terminal but does not include first downlink initial BWP information indicating a downlink initial BWP dedicated to the specific-type terminal, and the downlink initial BWP indicated by the second downlink initial BWP information included in the BWP-related information obtained from the SIB1 meets a preset bandwidth requirement, switch the downlink BWP to the downlink initial BWP indicated by the second downlink initial BWP information included in the BWP-related information obtained from the SIB1.

In some embodiments, the processing module 1001 is configured to: when the BWP-related information obtained from the SIB1 includes second downlink initial BWP information indicating a downlink initial BWP for a common-type terminal but does not include first downlink initial BWP information indicating a downlink initial BWP dedicated to the specific-type terminal, and the downlink initial BWP indicated by the second downlink initial BWP information included in the BWP-related information obtained from the SIB 1 does not meet a preset bandwidth requirement, switch the downlink BWP to a downlink initial BWP for the common-type terminal indicated by third downlink initial BWP information included in the BWP-related information obtained from the MIB.

In some embodiments, the processing module 1001 is configured to: when the BWP-related information obtained from the SIB1 does not include second downlink initial BWP information indicating a downlink initial BWP for a common-type terminal and first downlink initial BWP information indicating a downlink initial BWP dedicated to the specific-type terminal, switch the downlink BWP to a downlink initial BWP for the common-type terminal indicated by third downlink initial BWP information included in the BWP-related information obtained from the MIB.

In some embodiments, the processing module 1001 is configured to: when the BWP-related information obtained from the SIB 1 does not include first downlink initial BWP information indicating a downlink initial BWP dedicated to the specific-type terminal, switch the downlink BWP to a downlink initial BWP for a common-type terminal indicated by third downlink initial BWP information included in the BWP-related information obtained from the MIB.

Referring to FIG. 11, it is a structure diagram illustrating a communication device 1100 according to embodiments of the present disclosure. The communication device 1100 may be a network device, a terminal device, or a chip, a system on chip or a processor that supports the network device to implement the method, or a chip, a system on chip or a processor that supports the terminal device to implement the method. The device may be configured to implement the method described in the method embodiments, and may refer to descriptions in the method embodiments.

The communication device 1100 may include one or more processors 1101. The processor 1101 may include a general purpose processor or a dedicated processor. For example, the processor 141 may be a baseband processor or a central processor. The baseband processor may be configured to process a communication protocol and communication data, and the central processor may be configured to control a communication device (e.g., a base station, a baseband chip, a terminal device, a terminal device chip, a DU or CU, etc.), to execute a computer program, and process data of the computer program.

Alternately, the communication device 1100 may further include one or more memories 1102 on which a computer program 1104 stored. The memory 1102 executes the computer program 1104 so that the communication device 1100 performs the method as described in the above method embodiments. Alternately, the memory 1102 may further store data. The communication device 1100 and the memory 1102 may be independently configured or integrated together.

Alternately, the communication device 1100 may further include a transceiver 1105 and an antenna 1106. The transceiver 1105 may be referred to as a transceiving unit, a transceiver or a transceiving circuit, which may be configured to achieve a transceiving function. The transceiver 1105 may include a receiver and a transmitter. The receiver may be referred to as a receiving machine or a receiving circuit, etc., for implementing a receiving function; the transmitter may be referred to as a transmitting machine or a transmitting circuit, etc. for implementing a transmitting function.

Alternately, the communication device 1100 may further include one or more interface circuits 1107. The interface circuit 1107is configured to receive code instructions and transmit the code instructions to the processor 1101. The processor 1101 runs the code instructions so that the communication device 1100 performs the method according to the above method embodiments.

When the communication device 1100 is a terminal device, the processor 1101 is configured to execute the step S302 in FIG. 3, the step S402 (including the steps S4021-S4024) in FIG. 4, the steps S501-S502 in FIG. 5 or the step S601 (including the steps S6011-S6016), the step S602 (including the steps S6021-S6024) in FIG. 6; the transceiver 1105 is configured to execute the step S301 in FIG.3, or the step S401 in FIG. 4.

When the communication device 1100 is a network device, the transceiver 1105 is configured to execute the step S201 in FIG.2.

In an implementation, the processor 1101 may include a transceiver configured to implement receiving and transmitting functions. For example, the transceiver may be a transceiving circuit, or an interface, or an interface circuit. The transceiving circuit, the interface or the interface circuit configured to implement receiving and transmitting functions may be separate or integrated together. The transceiving circuit, the interface or the interface circuit may be configured to read and write codes/data, or the transceiving circuit, the interface or the interface circuit may be configured to transmit or deliver a signal.

In an implementation, the processor 1101 may be stored with a computer program 1103. The computer program 1103 runs on the processor 1101 so that the communication device 1100 performs the method as described in the above method embodiments. The computer program 1103 may be solidified in the processor 1101, in which case the processor 1101 may be implemented by hardware.

In an implementation, the communication device 1100 may include a circuit that may implement a transmitting or receiving or communication function in the above method embodiments. The processor and the transceiver described in the present disclosure may be implemented on integrated circuits (ICs), analog ICs, radio frequency integrated circuits (RFICs), mixed signal ICs, application specific integrated circuits (ASICs), printed circuit boards (PCBs), electronic devices, etc. The processor and the transceiver may further be fabricated by using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe) and gallium arsenide (GaAs).

The communication device described in the above embodiments may be a network device or a terminal device, which is not limited in the scope of the communication device described in the present disclosure, and a structure of the communication device may not be subject to FIG. 11. The communication device may be a stand-alone device or may be a part of a larger device. For example, the communication device may be:
(1) a stand-alone integrated circuit (IC), or a chip, or a system on chip or a subsystem;
(2) a set of one or more ICs, optionally, which may also include a storage component for storing data and a computer program;
(3) an ASIC, such as a Modem;
(4) a module that may be embedded within other devices;
(5) a receiver, a terminal device, a smart terminal device, a cellular phone, a wireless device, a handset, a mobile unit, a vehicle-mounted device, a network device, a cloud device, an artificial intelligence device, etc.; and
(6) others, and so forth.

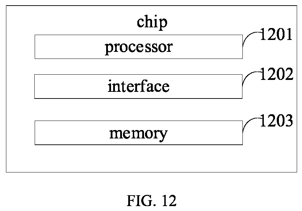

In the case that the communication device may be a chip or a system on chip, please refer to a structure diagram of a chip as illustrated in FIG. 12. The chip illustrated in FIG. 12 includes a processor 1201 and an interface 1202, in which the number of processors 1201 may be one or more and the number of interfaces 1202 may be one or more.

In the case where the chip is used to implement the functionality of a terminal device in the embodiments of the present disclosure: the processor 1001 is configured to execute the step S302 in FIG. 3, the step S402 (including the steps S4021-S4024) in FIG. 4, the steps S501-S502 in FIG. 5 or the step S601 (including the steps S6011-S6016), the step S602 (including the steps S6021-S6024) in FIG. 6; the interface 1202 is configured to execute the step S301 in FIG.3, or the step S401 in FIG. 4.

In the case where the chip is used to implement the functionality of a network device in an embodiment of the present disclosure, the interface 1202 is configured to execute the step S201 in FIG.2.

Alternately, the chip further includes a memory 1203, configured to save a necessary computer program and data.

Those skilled in the related art may understand that, various illustrative logical blocks and steps listed in embodiments of the present disclosure, may be implemented by an electronic hardware, a computer software or a combination of an electronic hardware and a computer software. Whether the function is implemented by the hardware or the software depends on specific applications and design requirements for an overall system. Those skilled in the art may implement the functions by using various methods for each specific application, but such an implementation should not be understood as going beyond the protection scope of embodiments of the present disclosure.

A system for configuring an initial BWP is further provided in embodiments of the disclosure. The system includes a communication apparatus as a terminal device in the preceding embodiments of FIG. 9- FIG. 10 and a communication apparatus as a network device n the preceding embodiments of FIG. 7. Alternatively, the system includes a communication device as a terminal device and a communication device as a network device in the preceding embodiment of FIG. 10.

A readable storage medium with instructions stored is further provided in the disclosure. When the instructions are executed by a computer, steps in the any one method embodiment are implemented.

A computer program product is further provided in the disclosure. The computer program product implements the functions of the above any one method embodiment when executed by a processor.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the disclosure, but also to indicate an order of precedence.

At least one in the present disclosure may also be described as one or more, and a plurality of may be two, three, four or more, which is not limited in the present disclosure. In embodiments of the present disclosure, for a kind of technical feature, technical features in the kind of technical feature are distinguished by "first", "second", "third", "A", "B", "C" and "D", and there is no order of precedence or magnitude between technical features described in "first", "second", "third", "A", "B", "C" and "D".

As used herein, the terms "machine-readable medium" and "computer-readable medium" refer to any computer program product, device, and/or apparatus (e.g., a disk, an optical disk, a memory, a programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

The systems and techniques described herein may be implemented in a computing system that includes back-end components (e.g., as a data server), or a computing system that includes middleware components (e.g., an application server), or a computing system that includes front-end components (e.g., a user computer with a graphical user interface or a web browser through which a user may interact with implementations of the systems and techniques described herein), or a computing system that includes any combination of the back-end components, the middleware components, or the front-end components. The components of the system may be interconnected by any form or medium of digital data communication (e.g., a communication network). Examples of communication networks include a local area network (LAN), a wide area network (WAN), and the Internet.

A computer system may include a client and a server. The client and server are generally remote from each other and typically interact through a communication network. By running computer programs with a client-server relationship on respective computers, a relationship between the client and the server is generated.

It should be understood that various forms of the processes shown above may be used, with the steps reordered, added or deleted. For example, the steps described in the present disclosure may be executed in parallel, sequentially, or in different orders, as long as the expected results of the technical solutions disclosed in the present disclosure may be achieved, which is not limited herein.

In addition, it should be understood that the various embodiments described in the present disclosure may be implemented individually or in combination with other embodiments when the solution permits.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the disclosure. However, the protection scope of the disclosure is not limited here. Changes and substitutions that may be easily considered by those skilled in the art shall be contained within the protection scope of the present disclosure. Therefore, the protection scope of the disclosure shall be subject to the protection scope of claims.

## Claims

1. A method for configuring an initial bandwidth part (BWP), performed by a network device, the method comprising:
sending BWP-related information to a terminal, wherein the BWP-related information comprises first downlink initial BWP information indicating a downlink initial BWP dedicated to a specific-type terminal and/or first uplink initial BWP information indicating an uplink initial BWP dedicated to the specific-type terminal.

2. The method according to claim 1, wherein for an asymmetric spectrum, a center frequency point of the uplink initial BWP indicated by the first uplink initial BWP information is aligned with a center frequency point of the downlink initial BWP indicated by the first downlink initial BWP information.

3. The method according to claim 1 or 2, wherein the first downlink initial BWP information has at least one of: a random access response (RAR) search space, a paging search space, or other system message search space.

4. The method according to claim 1 or 2, wherein the first downlink initial BWP information only has a random access response (RAR) search space or a paging search space.

5. The method according to any one of claims 1 to 4, wherein the BWP-related information is carried in a system information block 1 (SIB1).

6. A method for configuring an initial bandwidth part (BWP), performed by a specific-type terminal, the method comprising:
obtaining BWP-related information sent by a network device, wherein the BWP-related information comprises first downlink initial BWP information indicating a downlink initial BWP dedicated to the specific-type terminal and/or first uplink initial BWP information indicating an uplink initial BWP dedicated to the specific-type terminal; and
determining an uplink initial BWP and/or a downlink initial BWP used by the specific-type terminal according to the BWP-related information.

7. The method according to claim 6, wherein determining the downlink initial BWP used by the specific-type terminal according to the BWP-related information comprises any of:
when the BWP-related information comprises the first downlink initial BWP information, determining the downlink initial BWP indicated by the first downlink initial BWP information as the downlink initial BWP used by the specific-type terminal; or
when the BWP-related information does not comprise the first downlink initial BWP information, determining the downlink initial BWP indicated by second downlink initial BWP information as the downlink initial BWP used by the specific-type terminal, wherein the second downlink initial BWP information is comprised in the BWP-related information or a master information block (MIB), and the second downlink initial BWP information indicates a downlink initial BWP for a common-type terminal.

8. The method according to claim 6, wherein determining the uplink initial BWP used by the specific-type terminal according to the BWP-related information comprises any of:
when the BWP-related information comprises the first uplink initial BWP information, determining the uplink initial BWP indicated by the first uplink initial BWP information as the uplink initial BWP used by the specific-type terminal; or
when the BWP-related information does not comprise the first uplink initial BWP information, determining the uplink initial BWP indicated by second uplink initial BWP information as the uplink initial BWP used by the specific-type terminal, wherein the second uplink initial BWP information is comprised in the BWP-related information, and the second uplink initial BWP information indicates an uplink initial BWP for a common-type terminal.

9. The method according to any one of claims 6 to 8, wherein obtaining the BWP-related information sent by the network device comprises:
obtaining the BWP-related information from a system information block 1 (SIB1).

10. A method for switching a bandwidth part (BWP), performed by a specific-type terminal in a connected state, the method comprising:
performing BWP switching according to BWP-related information obtained from system information sent by a network device, wherein the system information comprises a master information block (MIB) and/or a system information block 1 (SIB1).

11. The method according to claim 10, wherein performing BWP switching according to the BWP-related information obtained from the system information sent by the network device comprises any of:
when there is no random access channel (RACH) on a current active BWP, performing uplink BWP switching and downlink BWP switching according to the BWP-related information obtained from the system information; or
when a BWP inactivity timer on a current active BWP expires and the specific-type terminal is not configured with a default downlink BWP, performing downlink BWP switching according to the BWP-related information obtained from the system information.

12. The method according to claim 11, wherein when there is no RACH on the current active BWP, performing uplink BWP switching according to the BWP-related information obtained from the system information comprises:
when the BWP-related information obtained from the SIB1 comprises first uplink initial BWP information indicating an uplink initial BWP dedicated to the specific-type terminal, switching an uplink BWP to the uplink initial BWP indicated by the first uplink initial BWP information.

13. The method according to claim 11, wherein when there is no RACH on the current active BWP, performing uplink BWP switching according to the BWP-related information obtained from the system information comprises:
when the BWP-related information obtained from the SIB1 comprises first uplink initial BWP information indicating an uplink initial BWP dedicated to the specific-type terminal and the uplink initial BWP indicated by the first uplink initial BWP information has random access resources configured for the specific-type terminal, switching an uplink BWP to the uplink initial BWP indicated by the first uplink initial BWP information.

14. The method according to claim 11, wherein when there is no RACH on the current active BWP, performing uplink BWP switching according to the BWP-related information obtained from the system information comprises:
when the BWP-related information obtained from the SIB1 comprises second uplink initial BWP information indicating an uplink initial BWP for a common-type terminal but does not comprise first uplink initial BWP information indicating an uplink initial BWP dedicated to the specific-type terminal, or when the BWP-related information obtained from the SIB1 comprises the first uplink initial BWP information and the second uplink initial BWP information but the uplink initial BWP indicated by the first uplink initial BWP information does not have random access resources configured for the specific-type terminal, switching an uplink BWP to the uplink initial BWP indicated by the second uplink initial BWP information.

15. The method according to any one of claims 11 to 14, wherein when there is no RACH on the current active BWP, performing downlink BWP switching according to the BWP-related information obtained from the system information comprises:
switching a downlink BWP to a downlink initial BWP with a random access response (RAR) search space of the specific-type terminal.

16. The method according to claim 15, wherein switching the downlink BWP to the downlink initial BWP with the RAR search space of the specific-type terminal comprises:
when the BWP-related information obtained from the SIB1 comprises first downlink initial BWP information indicating a downlink initial BWP dedicated to the specific-type terminal, and the downlink initial BWP indicated by the first downlink initial BWP information has the RAR search space, switching the downlink BWP to the downlink initial BWP indicated by the first downlink initial BWP information.

17. The method according to claim 15, wherein switching the downlink BWP to the downlink initial BWP with the RAR search space of the specific-type terminal comprises:
when the BWP-related information obtained from the SIB1 comprises second downlink initial BWP information indicating a downlink initial BWP for a common-type terminal and first downlink initial BWP information indicating a downlink initial BWP dedicated to the specific-type terminal, the downlink initial BWP indicated by the first downlink initial BWP information does not have the RAR search space, and the downlink initial BWP indicated by the second downlink initial BWP information comprised in the BWP-related information obtained from the SIB1 meets a preset bandwidth requirement, switching the downlink BWP to the downlink initial BWP indicated by the second downlink initial BWP information comprised in the BWP-related information obtained from the SIB1.

18. The method according to claim 15, wherein switching the downlink BWP to the downlink initial BWP with the RAR search space of the specific-type terminal comprises:
when the BWP-related information obtained from the SIB1 comprises second downlink initial BWP information indicating a downlink initial BWP for a common-type terminal and first downlink initial BWP information indicating a downlink initial BWP dedicated to the specific-type terminal, the downlink initial BWP indicated by the first downlink initial BWP information does not have the RAR search space, and the downlink initial BWP indicated by the second downlink initial BWP information comprised in the BWP-related information obtained from the SIB1 does not meet a preset bandwidth requirement, switching the downlink BWP to a downlink initial BWP for the common-type terminal indicated by third downlink initial BWP information comprised in the BWP-related information obtained from the MIB.

19. The method according to claim 15, wherein switching the downlink BWP to the downlink initial BWP with the RAR search space of the specific-type terminal comprises:
when the BWP-related information obtained from the SIB1 does not comprise second downlink initial BWP information indicating a downlink initial BWP for a common-type terminal but comprises first downlink initial BWP information indicating a downlink initial BWP dedicated to the specific-type terminal, and the downlink initial BWP indicated by the first downlink initial BWP information does not have the RAR search space, switching the downlink BWP to a downlink initial BWP for the common-type terminal indicated by third downlink initial BWP information comprised in the BWP-related information obtained from the MIB.

20. The method according to claim 15, wherein switching the downlink BWP to the downlink initial BWP with the RAR search space of the specific-type terminal comprises:
when the BWP-related information obtained from the SIB1 comprises first downlink initial BWP information indicating a downlink initial BWP dedicated to the specific-type terminal, and the downlink initial BWP indicated by the first downlink initial BWP information does not have the RAR search space, switching the downlink BWP to the downlink initial BWP for a common-type terminal indicated by third downlink initial BWP information comprised in the BWP-related information obtained from the MIB.

21. The method according to claim 11, wherein when the BWP inactivity timer on the current active BWP expires and the specific-type terminal is not configured with the default downlink BWP, performing downlink BWP switching according to the BWP-related information obtained from the system information comprises:
when the BWP-related information obtained from the SIB1 comprises first downlink initial BWP information indicating a downlink initial BWP dedicated to the specific-type terminal, switching a downlink BWP to the downlink initial BWP indicated by the first downlink initial BWP information.

22. The method according to claim 11, wherein performing downlink BWP switching according to the BWP-related information obtained from the system information comprises:
when the BWP-related information obtained from the SIB1 comprises second downlink initial BWP information indicating a downlink initial BWP for a common-type terminal but does not comprise first downlink initial BWP information indicating a downlink initial BWP dedicated to the specific-type terminal, and the downlink initial BWP indicated by the second downlink initial BWP information comprised in the BWP-related information obtained from the SIB1 meets a preset bandwidth requirement, switching a downlink BWP to the downlink initial BWP indicated by the second downlink initial BWP information comprised in the BWP-related information obtained from the SIB1.

23. The method according to claim 11, wherein performing downlink BWP switching according to the BWP-related information obtained from the system information comprises:
when the BWP-related information obtained from the SIB1 comprises second downlink initial BWP information indicating a downlink initial BWP for a common-type terminal but does not comprise first downlink initial BWP information indicating a downlink initial BWP dedicated to the specific-type terminal, and the downlink initial BWP indicated by the second downlink initial BWP information comprised in the BWP-related information obtained from the SIB1 does not meet a preset bandwidth requirement, switching a downlink BWP to a downlink initial BWP for the common-type terminal indicated by third downlink initial BWP information comprised in the BWP-related information obtained from the MIB.

24. The method according to claim 11, wherein performing downlink BWP switching according to the BWP-related information obtained from the system information comprises:
when the BWP-related information obtained from the SIB1 does not comprise second downlink initial BWP information indicating a downlink initial BWP for a common-type terminal and first downlink initial BWP information indicating a downlink initial BWP dedicated to the specific-type terminal, switching a downlink BWP to a downlink initial BWP for the common-type terminal indicated by third downlink initial BWP information comprised in the BWP-related information obtained from the MIB.

25. The method according to claim 11, wherein performing downlink BWP switching according to the BWP-related information obtained from the system information comprises:
when the BWP-related information obtained from the SIB1 does not comprise first downlink initial BWP information indicating a downlink initial BWP dedicated to the specific-type terminal, switching a downlink BWP to a downlink initial BWP for a common-type terminal indicated by third downlink initial BWP information comprised in the BWP-related information obtained from the MIB.

26. An apparatus for configuring an initial bandwidth part (BWP), comprising:
a transceiver module, configured to send BWP-related information to a terminal, wherein the BWP-related information comprises first downlink initial BWP information indicating a downlink initial BWP dedicated to a specific-type terminal and/or first uplink initial BWP information indicating an uplink initial BWP dedicated to the specific-type terminal.

27. An apparatus for configuring an initial bandwidth part (BWP), comprising:
a transceiver module, configured to obtain BWP-related information sent by a network device, wherein the BWP-related information comprises first downlink initial BWP information indicating a downlink initial BWP dedicated to the specific-type terminal and/or first uplink initial BWP information indicating an uplink initial BWP dedicated to the specific-type terminal; and
a processing module, configured to determine an uplink initial BWP and/or a downlink initial BWP used by the specific-type terminal according to the BWP-related information.

28. An apparatus for switching an initial bandwidth part (BWP), comprising:
a processing module, configured to perform BWP switching according to BWP-related information obtained from system information sent by the network device, wherein the system information comprises a master information block (MIB) and/or a system information block 1 (SIB1).

29. A communication device, comprising: a transceiver; a memory; a processor connected to the transceiver and the memory respectively, configured to control the transceiver to receive and transmit a wireless signal and enable the method according to any one of claims 1-25 is implemented, by executing computer executable instructions on the memory.

30. A computer storage medium storing computer executable instructions which, when executed by a processor, enable the method according to any one of claims 1-25 is implemented.
